# EUROPEAN PATENT APPLICATION

(11) **EP 3 995 866 A1**
(43) Date of publication of application: **11.05.2022**
(21) Application number: 20206469.7
(22) Date of filing: 09.11.2020
(51) Int. Cl.: G01V 5/00

(54) **A METHOD OF SECURITY SCANNING PIECES OF LUGGAGE ON A CART**

(71) Applicant: Exruptive A/S, 2640 Hedehusene (DK)
(72) Inventor: Christensen, Morten, 2640 Hedehusene (DK)
(74) Representative: Inspicos P/S

(57) **Abstract**

In a security check, a complete cart with pieces of luggage is scanned to determine whether a threat is present or not. An image is provided, of the cart and owner, before delivery of the cart to the scanner, and if a threat is present, the image is provided to allow identification of the owner. Also, the image may be used for determining whether pieces of luggage are lost in the scanner.

## Description

The present invention relates to security scanning of pieces of luggage on a cart and in particular to the checking of a complete cart with pieces of luggage where an image is provided when the cart is delivered to the scanner. This image may be used for identifying an owner of the cart or for identifying whether pieces of luggage have been lost or left in the scanner.

Security scanner types may be seen in EP2614389, US9736654 and WO2017/005757.

A first aspect of the invention relates to a system for checking pieces of luggage on a cart, the system comprising:
- a checking element for checking pieces of luggage on a cart and outputting information relating to whether the cart or pieces of luggage comprise a threat,
- a receiving element for receiving the cart with the pieces of luggage and transporting the cart with the pieces of luggage to and past the checking element,
   wherein:
   - the receiving element comprises a camera configured to provide an image of the cart with the pieces of luggage as well as of a person delivering the cart with the pieces of luggage to the receiving element, and
   - the checking element is configured to output the image, if the cart and/or pieces of luggage comprise a threat.

In this context, a piece of luggage may be a suitcase, briefcase, woman's purse, shopping bag, computer bag or the like. Clearly, all types of luggage may be scanned, independently of how it is embodied, whether it is in a regular suitcase, a box, bag, backpack or the like. Pieces of luggage usually will be what persons bring onboard airplanes in the cabin, including musical instruments, clothes, jackets, coats, hats, and the like.

According to the invention, the checking element is configured to scan or check the pieces of luggage while on the cart. Thus, the complete cart with the pieces of luggage is received by the receiving element and transported past, such as through, the checking element.

Usually, the checking element is a standard security scanner such as an X-ray scanner scanning the cart and pieces of luggage. It may be desired that the cart is made of a polymer, plastics or the like in order for it to be translucent to the radiation used in the scanner.

The pieces of luggage may be supported by the cart, such as by being provided on a portion of the cart, hanging from the cart or the like. Preferably, the pieces of luggage are secured to the cart sufficiently for the pieces of luggage to remain on the cart when the cart is transported past the checking element.

The checking element, which may be the core of a security checker or scanner, is configured to output information relating to whether the cart or pieces of luggage comprise a threat. A threat may be an illegal or not allowed substance or element, such as a flammable substance, an explosive, a weapon, drugs, or the like. The information may be on any desired form, such as an X-ray image indicating the threat, a message (written or spoken) to an operator or security officer that a threat is present. The information may further relate to a type of the indicated threat, such as a weapon, illegal substance, explosive or the like. Scanners are known which are able to discern not only that a threat is present but also which type of threat. Different materials interact differently with e.g. X-rays so that different types of threats may be distinguished.

The receiving element is configured to transport the cart and pieces of luggage past the checking element. Clearly, this relative movement may comprise moving the cart. Alternatively, the checking element may be moved. Often, the checking element comprises an enclosure for protecting the environment from X-rays from the scanner, so that it would be more suitable to have the cart move through that enclosure.

The receiving element may comprise any desired means for moving the cart, such as a belt or other traction element. The receiving element may extend through or past the checking element to be able to transport the cart through and past the scanner.

As the cart would normally be on wheels, the receiving element need merely pull or push the cart if desired.

According to the invention, the receiving element comprises a camera configured to provide an image of the cart with the pieces of luggage as well as of a person delivering the cart with the pieces of luggage to the receiving element. A camera may be any type of image generating element, such as a still camera, a video camera, a scanning camera or the like. Preferably, the camera is directed so as to provide an image of the cart, one or more of the pieces of luggage as well as at least a portion, preferably comprising the head, of the person delivering the cart to the receiving element. Alternatively, an image of an identity card or passport may be obtained.

Then, the checking element is configured to output the image, if the cart and/or pieces of luggage comprise a threat. In this manner, the person delivering the cart may be identified and retained or questioned. An advantage of obtaining an image at this point in time is that the image will reflect the person's appearance at this moment, so that the clothes, hairstyle, hair colour and the like may be easily determined and sought for.

In an alternative system, the receiving element may require a person to present identification or the like in order for the receiving element to accept and transport the cart. This identity may then be presented instead of, or in addition to, the image.

In one embodiment, the checking element is configured to determine a position of the threat and to indicate in the image the position of the threat. As the image may be a standard image of the cart and pieces of luggage, the position of the threat may indicate e.g. that the threat is positioned in a particular piece of luggage. The position may be a highlighting of the relevant piece of luggage or another indication, such as an X, a box or an arrow to the position in question. Clearly, multiple images may be provided, such as from different angles. In this situation, the position may be indicated in multiple images so that the 3D position of the threat may be ascertained, so that only that relevant piece of luggage need be examined.

In one embodiment, the cart comprises means for reading an identification document, deriving an identity of an owner of the pieces of luggage and forwarding the identity of the owner to the receiving element, the checking element being configured to display the identity together with the image, if the cart and/or pieces of luggage comprise a threat. Thus, the receiving element may accept the cart only after having read the identification document. Thus, in addition to the image, the identity, such as an image of the identity document, may be provided to an operator or security officer in order to provide further information on the person before checking the luggage. The reading of the identity document may be the providing of an image, potentially followed by an interpretation thereof, or a remote reading of the identity document, such as via a bar code, a magnetic stripe, via NFC, RFID, Bluetooth or any other manner.

In one embodiment, another, such as an initial, image may be provided or generated when the passenger has selected or has been handed the trolley and has provided the hand luggage thereon. In fact, the image may be provided when the passenger enters the airport. At this point in time, the passenger has not yet been at the check-in counter and thus will also be transporting any larger luggage for checking-in to be transported in the cargo bay of the airplane.

The initial image may be used for checking, by comparing with the image provided at the scanner, whether the passenger is missing hand luggage or has received additional hand luggage while in the airport. This information may be output to personnel at the scanner, such as in the outputting step, so that this fact may be checked further.

If the initial image represents also the larger pieces of luggage of the passenger, this image may be used for assisting in identifying this luggage if it has to be identified and removed from the airplane before departure. Additionally or alternatively, this image may be used at the arrival airport to ensure that the passenger leaves the arrival airport with the correct luggage. It is noted that when the larger pieces of luggage are transported, this may be on other trolley types than the ones used in the security scanner. Thus, the comparison may expect that the pieces of luggage are re-arranged between the images.

Thus, imaging means, such as cameras, may be positioned at entrances and/or exits of airports and/or where trolleys are handed out for use in the security areas in airports, such as at or after the check-in counter or area.

The system may take into account the fact that persons may buy products, such as make-up, liquor, clothes or the like, in the airport so that the later images may comprise additional hand luggage than earlier images. It may be decided to not react to the presence of such products. However, the presence of additional, larger elements, such as bags or the like, may be notices so that the operators at security, for example, may check these.

A situation which may be desired identified is that where one passenger carries a bag into the airport but where another person carries it through or past security. In such situations, the real owner of the bag may be desired identified, especially if the bag comprises a threat. The real owner may be identified based on the fact that this person will, sooner or later, pass security (and thus be imaged) without that bag. Thus, if a bag is missing or an additional bag is seen, the present passenger may be retained until the passenger with the additional bag or missing that bag has been identified, especially if that bag comprises a threat.

Clearly, the above comparisons may be performed in the same manners as described both above and below.

Another aspect of the invention relates to a system for checking pieces of luggage on a cart, the system comprising:
- a checking element for checking pieces of luggage on a cart and outputting information relating to whether the cart or pieces of luggage comprise a threat, the checking element comprising an enclosure wherein radiation is emitted through the cart and pieces of luggage,
- a receiving element for receiving the cart with the pieces of luggage and transporting the cart with the pieces of luggage trough the enclosure of the checking element,
   wherein the receiving element comprises:
   - a first camera configured to provide a first image of the cart with the pieces of luggage, such as including of a person delivering the cart with the pieces of luggage to the receiving element, before transport to the enclosure,
   - a second camera configured to provide a second image of the cart with the pieces of luggage after transport through the enclosure, and
   - a processor for comparing the first and second images to identify if one or more pieces of luggage are missing in the second image.

Naturally, all considerations, definitions, embodiments and the like from the above or below aspects of the invention are equally relevant in relation to this aspect of the invention.

Thus, the cart and pieces of luggage may be as described above, as may the checking element which now comprises an enclosure through which the cart and luggage is transported. In this enclosure, radiation is emitted through the cart and pieces of luggage in order to identify threats.

The receiving element and checking element may be as described above.

In this situation, a first camera provides an image of the cart and pieces of luggage before transport through the enclosure. The first camera may also provide, in the image, portions of the person delivering the cart to the receiving element, but this is not a requirement. Multiple images may be provided from different angles in order to document the pieces of luggage, such as their position on the cart and the number or presence thereof.

A second camera then provides another image. Again, multiple images may be provided.

A comparison is performed in a processor. The processor may be any type of processor, such as a controller, ASIC, FPGA, DSP, graphics controller/card, soft ware controlled or hardwired. The operation of the processor may be distributed if desired.

The comparison is performed to identify if one or more pieces of luggage are missing in the second image such as compared to the first image. In this situation, a missing piece of luggage may have fallen from the cart and may now lie in the enclosure and/or may block the checking element.

Thus, the operation of the system may be halted while that piece of luggage is retrieved. Also, the owner of the piece of luggage may be identified, if the image comprises an image of the person delivering the cart to the receiving element.

In general, the cart may comprise means for reading an identification document, deriving an identity of an owner of the pieces of luggage and forwarding the identity of the owner to the receiving element, the checking element being configured to output or display the identity.

The knowledge of the identity of the person, passenger, owner or the like may be used for a number of purposes. The identity may be fed to the checking element to be output or displayed to an operator or security officer who may compare this identity to a roster, a passenger list or the like. Also, the nationality of the person may be compared to other information to ensure that the person is credible and should be allowed on an airplane.

The identity may alternatively be used by the airport or the like to determine the position of the person. The cart may read the identity document and communicate this to a central server of the airport which may now determine the position of the cart and compare this to a departure gate, departure time and the like an may inform the person, if the gate has changed or if it is time to travel toward the gate for boarding.

A third aspect of the invention relates to a method of checking pieces of luggage on a cart, the method comprising the steps of:
- receiving a cart with pieces of luggage and transporting the cart with the pieces of luggage to and past a checking element,
- providing an image of the cart with the pieces of luggage as well as of a person delivering the cart with the pieces of luggage to the receiving element,
- checking, in the checking element, the pieces of luggage on the cart and outputting information relating to whether the cart or pieces of luggage comprise a threat,
   the checking element outputting the image, if the cart and/or pieces of luggage comprise a threat.

In this context, the order of the step may be altered.

Clearly, all above and below aspects, embodiments and other considerations may be exchanged between aspects of the invention.

According to this aspect of the invention, a cart with pieces of luggage is received and transported to and past a checking element.

As mentioned above, the transporting may be a pulling or pushing of the cart with its contents. Alternatively, the cart may be provided on a band for this transport.

The reception may be the providing the cart in relation to the transporting element, such as by positioning the cart so as to engage with the transporting element.

The image may be provided by a camera which may be positioned in any desired position relative to the cart and the owner/passenger when the cart is delivered, which may be when the owner/passenger lets go of the cart and the cart is allowed to move through/past the checking element.

As mentioned above, the image represents at least part of the cart with the pieces of luggage as well as of a person delivering the cart with the pieces of luggage to the receiving element. Multiple images may be provided for obtaining a sufficient imaging of both the cart, the pieces of luggage and the person.

Then, the checking element performs the check. This may be as seen in the standard security check systems. The checking element will output information relating to whether the cart or pieces of luggage comprise a threat.

Then, if the cart and/or pieces of luggage comprise a threat, the checking element outputs the image.

In one embodiment, the method further comprises the step of determining a position of the threat and indicating, in the image, the position of the threat. This could be in any desired manner. Often, the image is provided on a display or monitor. The indication could be a highlighting of the piece of luggage comprising the threat, a pointer, arrow, X or the like.

If multiple images are provided from different angles, the position may be indicated in multiple such images to provide a 3D position. Clearly, a 3D rendering of the cart and pieces of luggage may be derived from multiple images if desired and the position may be provided in such rendering.

In one embodiment, the method further comprises the step of reading an identification document, deriving an identity of an owner of the pieces of luggage and forwarding the identity of the owner to the receiving element, the checking element displaying the identity together with the image, if the cart and/or pieces of luggage comprise a threat.

As mentioned above, this may give more information on the person. The displaying again may be on a monitor, and the reading may be any manner of reading, such as a remote or contact-less reading.

A final aspect of the invention relates to a method for checking pieces of luggage on a cart, the method comprising the steps of:
- receiving a cart with pieces of luggage and transporting the cart with the pieces of luggage trough an enclosure of a checking element,
- providing a first image of the cart with the pieces of luggage before transport to an enclosure,
- the checking element checking the pieces of luggage on the cart and outputting information relating to whether the cart or pieces of luggage comprise a threat, the checking step comprising emitting radiation through the cart and pieces of luggage while positioned in the enclosure,
- providing a second image of the cart with the pieces of luggage after transport through the enclosure, and
- comparing the first and second images to identify if one or more pieces of luggage are missing in the second image.

As mentioned above, all embodiments and the like may be equally relevant for this aspect of the invention.

The cart and pieces of luggage are received and are, according to this aspect, transported through an enclosure in which radiation is emitted toward the cart and pieces of luggage. This radiation may be X-rays.

The reception thus may be the initiation of the transport or the engagement of the cart with a transporting or receiving element.

The scanning may be as described above, as may the first image, which may or may not include an image of portions of the owner/passenger. Multiple images may be provided.

When the cart leaves the compartment, a second image is provided. Preferably, the first and second images are taken from at least substantially the same angle to the cart and/or the same distance so that comparison of the images is easy.

Comparison of two images of the same cart with the same pieces of luggage is especially easy when the images are provided from the same angle. If the distance or the optics are not the same, a scaling may be required, but if the pieces of luggage have not moved during the transport through the enclosure, they should be in the same positions. Thus, a simple image comparison may suffice to check whether luggage is missing.

Clearly, more complex analysis may be performed to determine, from the first and second images, the number of pieces of luggage and characteristics thereof, such as type (coat, handbag), colour, size, shape and the like. This may e.g. be derived from multiple first/second images such as to arrive at a 3D rendering of the cart and pieces of luggage. Thus, even if the luggage has moved, it may be ascertained that all luggage has passed through the compartment.

If luggage is missing, an alarm may be sounded and the checking element stopped to retrieve the missing luggage.

In one embodiment, the method further comprises the step of reading an identification document, deriving an identity of an owner of the pieces of luggage and outputting or displaying an identity of the owner.

In the following, preferred embodiments of the invention will be described with reference to the drawing, wherein:
- Figure 1 is a side view of a system according to the invention,
- Figure 2 is a front view of a receiving portion of the checking element
- Figure 3 illustrates images wherein a position of a threat is indicated

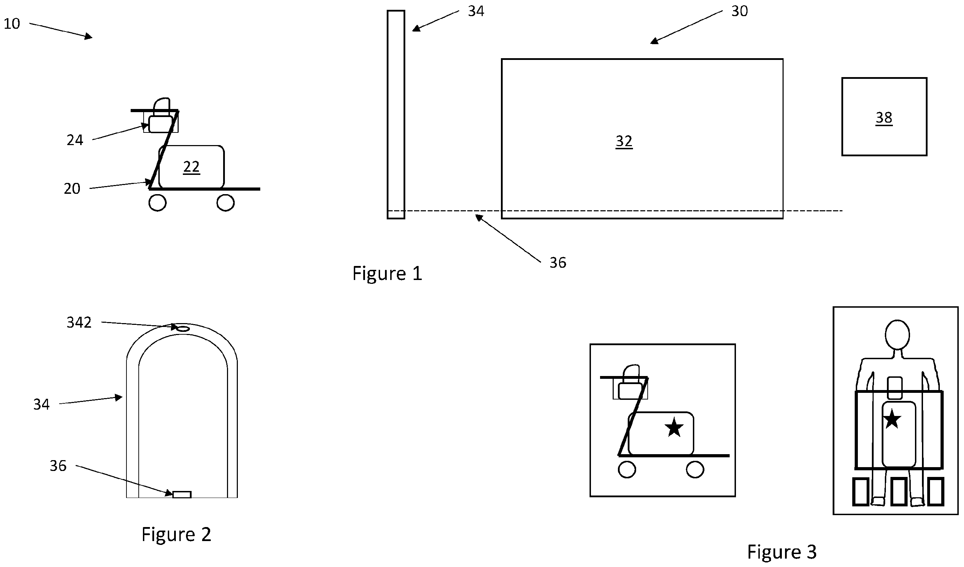

In figure 1, a system 10 according to the invention is illustrated comprising a cart 20 with a suitcase 22 and a handbag 24 which are the pieces of luggage of a person wishing to board an airplane.

In the airport, a security check is made using a security scanner or checking element 30 comprising a scanner or checker 32 configured to determine whether the cart or pieces of luggage comprise threats, such as explosives, combustible liquids or elements, or weapons, or illegal substances, such as drugs or the like.

As the pieces of luggage are to remain on the cart, the scanner 32 is configured to receive the whole cart as well as its contents.

In order to transport the cart through the scanner 32, a track 36 is provided for engaging the cart, such as one or more front wheels thereof, for puling or guiding the cart with its contents through the scanner.

In addition to the scanner and the track, a receiving element 34 is provided at which the track 36 begins and where the passenger will position the cart to engage the track to begin the passage to and through the scanner.

While the cart passes through the scanner, the passenger may him/herself be scanned or checked as usual in airport security.

When the passenger delivers the cart with its contents to the track 36, a camera 342 of the receiving element 34 provides an image of the cart with its luggage as well as of the person delivering the cart. The image may be provided from in front of the cart (viewing the passenger behind the cart) and/or from the side thereof.

Multiple advantages are obtained by providing the image. Firstly, as the passenger is separated from the cart while the cart is scanned, and as the scanner often is X-ray based and thus desired closed to a sufficient degree, pieces of luggage may fall from the cart while being scanned. As the full cart with all contents may be scanned in one step, the person may place coats, belts and the like on the cart. Such coats may fall from the cart and remain in the scanner. A person claiming that a coat, for example, is missing may have his/her picture retrieved from which the presence of the coat on the cart may be seen.

In fact, another image may be provided of the cart leaving the scanner so that it may be ascertained whether pieces of luggage or other belongings are missing compared to when the cart entered the scanner.

Another advantage is that if a threat is detected in a piece of luggage or in the cart, the person delivering the cart to the scanner may be identified from the image. The person may have left the security area, but from the image, the person and his/her clothes and present appearance may be determined so that a swift apprehension or identification may be possible.

Also, if a threat is detected in a piece of luggage, the pertaining piece of luggage may be identified in the image, so that security officers need not search through all pieces of luggage, any coats, purchases, bags or the like on the cart. The scanner may be able to determine a 3D position or a 2D position (such as seen from above or from the side) of the cart of the threat. This position may be correlated to a position in the image, so that the position of the thread may be identified and the searching made more efficient.

The image or images may be provided on a display or monitor 38 available to or visible to security personnel. This monitor may also display other information from the scanner, such as scanning images.

Naturally, multiple images may be provided from both the front and side of the cart so that the position of the threat in the images may be made even more precise so that not even the piece of luggage holding the threat may be identified but also the position of the threat in the piece of luggage.

In figure 3, two images are illustrated, the left image is taken from the side of the cart, such as by a camera provided on the inside of the arc of the receiving element 34, and the image to the right is taken from the front of the cart. In both images, a star illustrates a 3D position at which a threat has been identified. Thus, a security officer may now easily see where the potential threat is detected, so that a swift check may be made to see whether the threat is real or not. Also, the person delivering the cart may be seen, if the person is to be identified by security personnel.

In addition to the image provided when delivering the cart to the security scanner 30, an element similar to the receiving element 34 may be provided for handing out carts at the entrance to the airport. Thus, the passenger may retrieve a cart, where an initial image of the passenger and potentially also the cart may be provided. This image may also be provided to the security personnel so that additional information is available to them.

In one situation, one person may bring a piece of luggage to the airport, but another person brings it to the security area. This may be determined from the initial images and the image(s) provided at the scanner. If the person initially did not carry a particular piece of luggage when receiving the cart but did so later on, this may be brought to the attention of the security personnel.

The cart or delivery station may comprise an identity determining element, such as a passport scanner, identity card scanner and/or a boarding card scanner, so that the identity of the passenger is known. This information may be stored in the cart or in a central location from which it may be retrieved if desired. The cart may itself have an identity (such as stored in or defined by a barcode, QR code, RFID tag or the like), which may be determined, such as by a reader at the delivery station and the receiving element 34. Actually, the cart may hold and output the identity of the passenger to the receiving element 34 so that the identity of the passenger may be provided on the monitor 38.

The cart may have a positioning determining element, such as a GPS or other element capable of determining the whereabouts of the cart in the e.g. airport. Alternatively, the cart may output a signal, such as a wireless signal, which may be detected by detectors in the e.g. airport so that the position of the cart may be determined in that manner.

In this manner, the whereabouts of the cart and thus the passenger may be known. If the passenger is late for his/her flight, the airport personnel will know the position of the cart and may go to the passenger to have him/her move toward the boarding gate.

Also, the cart may comprise a monitor or display on which the passenger may get relevant information, such as gate number, boarding time, amount of travelling time to the gate, gate changes, boarding time changes or the like. Also, the passenger may be presented to offers from shops nearby if desired.

## Claims

1. A system for checking pieces of luggage on a cart, the system comprising:
- a checking element for checking pieces of luggage on a cart and outputting information relating to whether the cart or pieces of luggage comprise a threat,
- a receiving element for receiving the cart with the pieces of luggage and transporting the cart with the pieces of luggage to and past the checking element,
wherein:
- the receiving element comprises a camera configured to provide an image of the cart with the pieces of luggage as well as of a person delivering the cart with the pieces of luggage to the receiving element, and
- the checking element is configured to output the image, if the cart and/or pieces of luggage comprise a threat.

2. A system according to claim 1, wherein the checking element is configured to determine a position of the threat and to indicate in the image the position of the threat.

3. A system according to claim 1 or 2, wherein the cart comprises means for reading an identification document, deriving an identity of an owner of the pieces of luggage and forwarding the identity of the owner to the receiving element, the checking element being configured to display the identity together with the image, if the cart and/or pieces of luggage comprise a threat.

4. A system for checking pieces of luggage on a cart, the system comprising:
- a checking element for checking pieces of luggage on a cart and outputting information relating to whether the cart or pieces of luggage comprise a threat, the checking element comprising an enclosure wherein radiation is emitted through the cart and pieces of luggage,
- a receiving element for receiving the cart with the pieces of luggage and transporting the cart with the pieces of luggage trough the enclosure of the checking element,
wherein the receiving element comprises:
- a first camera configured to provide a first image of the cart with the pieces of luggage before transport to the enclosure,
- a second camera configured to provide a second image of the cart with the pieces of luggage after transport through the enclosure, and
- a processor for comparing the first and second images to identify if one or more pieces of luggage are missing in the second image.

5. A system according to any of the preceding claims, wherein the cart comprises means for reading an identification document, deriving an identity of an owner of the pieces of luggage and forwarding the identity of the owner to the receiving element, the checking element being configured to output or display the identity.

6. A method of checking pieces of luggage on a cart, the method comprising the steps of:
- receiving a cart with pieces of luggage and transporting the cart with the pieces of luggage to and past a checking element,
- providing an image of the cart with the pieces of luggage as well as of a person delivering the cart with the pieces of luggage to the receiving element,
- checking, in the checking element, the pieces of luggage on the cart and outputting information relating to whether the cart or pieces of luggage comprise a threat,
the checking element outputting the image, if the cart and/or pieces of luggage comprise a threat.

7. A method according to claim 6, further comprising the step of determining a position of the threat and indicating, in the image, the position of the threat.

8. A method according to claim 6 or 7, further comprising the step of reading an identification document, deriving an identity of an owner of the pieces of luggage and forwarding the identity of the owner to the receiving element, the checking element displaying the identity together with the image, if the cart and/or pieces of luggage comprise a threat.

9. A method for checking pieces of luggage on a cart, the method comprising the steps of:
- receiving a cart with pieces of luggage and transporting the cart with the pieces of luggage trough an enclosure of a checking element,
- providing a first image of the cart with the pieces of luggage before transport to an enclosure,
- the checking element checking the pieces of luggage on the cart and outputting information relating to whether the cart or pieces of luggage comprise a threat, the checking step comprising emitting radiation through the cart and pieces of luggage while positioned in the enclosure,
- providing a second image of the cart with the pieces of luggage after transport through the enclosure, and
- comparing the first and second images to identify if one or more pieces of luggage are missing in the second image.

10. A method according to any of claims 6-9, further comprising the step of reading an identification document, deriving an identity of an owner of the pieces of luggage and outputting or displaying an identity of the owner.
